(19) Europäisches Patentamt
European Patent Office
Office européen des brevets

(11) **EP 2 546 677 B1**

(12) **EUROPÄISCHE PATENTSCHRIFT**

(45) Veröffentlichungstag und Bekanntmachung des Hinweises auf die Patenterteilung:
**12.07.2017  Patentblatt 2017/28**

(51) Int Cl.:
*G01S 13/93* ^(2006.01)      *G01S 13/62* ^(2006.01)
*G01S 13/58* ^(2006.01)

(21) Anmeldenummer: **12168296.7**

(22) Anmeldetag: **16.05.2012**

(54) **Verfahren und Radarsensor zur Unterscheidung zwischen Vorwärtsfahrt und Rückwärtsfahrt bei einem Fahrzeug**

Method and radar sensor for distinguishing between forwards and backwards motion of a vehicle

Procédé et capteur radar destinés à distinguer la marche avant de la marche arrière dans un véhicule

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.07.2011  DE 102011078989**

(43) Veröffentlichungstag der Anmeldung:
**16.01.2013  Patentblatt 2013/03**

(73) Patentinhaber: **ROBERT BOSCH GMBH**
**70442 Stuttgart (DE)**

(72) Erfinder:
• **Kuehnle, Goetz**
**71282 Hemmingen (DE)**
• **Bechler, Dirk**
**76135 Karlsruhe (DE)**

(56) Entgegenhaltungen:
**EP-B1- 0 963 562      DE-A1-102008 008 385**
**DE-C2- 4 042 494      US-A- 3 974 500**
**US-A- 4 635 059**

• **MICHAEL WOLLITZER ET AL: "Multifunctional Radar Sensor for Automotive Application", IEEE TRANSACTIONS ON MICROWAVE THEORY AND TECHNIQUES, IEEE SERVICE CENTER, PISCATAWAY, NJ, US, Bd. 46, Nr. 5, 1. Mai 1998 (1998-05-01), XP011037173, ISSN: 0018-9480**

**Beschreibung**

Stand der Technik

Die Erfindung betrifft ein Verfahren zur Unterscheidung zwischen Vorwärtsfahrt und Rückwärtsfahrt bei einem Fahrzeug, das einen FMCW-Radarsensor aufweist, der dazu ausgebildet ist, Abstände und Relativgeschwindigkeiten von Objekten im Verkehrsumfeld des Fahrzeugs zu messen.

Radarsensoren werden in Kraftfahrzeugen zunehmend zur Erfassung des Verkehrsumfelds eingesetzt, beispielsweise im Rahmen eines sogenannten ACC-Systems (Adaptive Cruise Control), mit dem eine automatische Abstandsregelung durchgeführt werden kann. Für bestimmte Funktionen eines solchen ACC-Systems ist eine Kenntnis der Eigengeschwindigkeit des mit dem System ausgerüsteten Fahrzeugs erforderlich. Das gilt beispielsweise für sogenannte Tracking-Prozeduren, mit denen die Abstände und Relativgeschwindigkeiten der vom Radarsensor georteten Objekte relativ zum eigenen Fahrzeug über aufeinanderfolgende Messzyklen hinweg verfolgt werden können, so dass die in einem Zyklus erkannten Objekte mit in vorangegangenen Zyklen erkannten Objekten identifiziert werden können.

Die Eigengeschwindigkeit des Fahrzeugs lässt sich beispielsweise mit Hilfe von Radsensoren erfassen. Wenn jedoch nicht nur der Betrag, sondern auch die Richtung der Eigengeschwindigkeit erkannt werden soll, werden verhältnismäßig kostspielige Sensoren benötigt, die nicht nur den Drehwinkel, sondern auch die Drehrichtung erfassen können.

Im Prinzip wäre es auch denkbar, den Zustand des Fahrzeuggetriebes oder eines Rückfahrlichtschalters abzufragen, um zwischen Vorwärtsfahrt und Rückwärtsfahrt zu unterscheiden. Auf diese Weise ist eine fehlerfreie Unterscheidung zwischen Vorwärtsfahrt und Rückwärtsfahrt jedoch nicht immer möglich. Beispielsweise lässt sich bei einem Fahrzeug mit Handschaltgetriebe die Fahrtrichtung nicht erkennen, wenn das Fahrzeug im Leerlauf rollt. Auch bei einem Fahrzeug mit Automatikgetriebe kann beispielsweise bei starkem Gefälle der Fall eintreten, dass die gewählte Getriebestufe D (vorwärts) oder R (rückwärts) nicht die tatsächliche Rollrichtung des Fahrzeugs angibt. DE 10 2008 008 385 A1 beschreibt ein Dopplerradar, mit dem die Geschwindigkeit des Fahrzeugs anhand der gemessen Geschwindigkeit relativ zu ruhenden Objekten bestimmt wird.

Ähnliches Systeme werden auch in auch in DE 40 42 494 C2 und EP 0 936 562 B1 beschrieben.

Aus US 4 635 059 A1 ist ein Dopplerradar bekannt, das an der Unterseite des Fahrzeugs schräg auf die Fahrbahn gerichtet ist und speziell dazu dient, die Geschwindigkeit des Fahrzeugs über Grund zu messen.

Offenbarung der Erfindung

Aufgabe der Erfindung ist es, eine Unterscheidung zwischen Vorwärtsfahrt und Rückwärtsfahrt mit geringem Hardware-Aufwand zu ermöglichen.

Erfindungsgemäß wird diese Aufgabe bei einem Verfahren der eingangs genannten Art dadurch gelöst, dass die Unterscheidung zwischen Vorwärtsfahrt und Rückwärtsfahrt anhand einer charakteristischen Signatur eines von dem Radarsensor empfangenen Signals vorgenommen wird und dabei eine charakteristische Signatur eines Bodenclutter-Signals ausgewertet wird.

Dabei macht sich die Erfindung den Umstand zunutze, dass der Radarsensor praktisch immer Radarechos von stationären Objekten in seiner Umgebung empfängt, zumindest den sogenannten Bodenclutter, der durch Reflexionen der Radarstrahlung an Unebenheiten der Fahrbahnoberfläche hervorgerufen wird. Dieser Bodenclutter weist bei Vorwärtsfahrt eine andere Signatur als bei Rückwärtsfahrt auf, so dass sich anhand dieser Signatur zwischen Vorwärtsfahrt und Rückwärtsfahrt unterscheiden lässt.

Die Erfindung hat den Vorteil, dass zur Messung der Eigengeschwindigkeit des Fahrzeugs kostengünstige Raddrehzahlsensoren eingesetzt werden können, die nur die Impulse eines Winkelinkrementgebers zählen ohne zwischen den entgegengesetzten Drehrichtungen zu unterscheiden. Zwar erhält man auf diese Weise nur den Betrag und nicht das Vorzeichen der Eigengeschwindigkeit, doch lässt sich das Vorzeichen mit Hilfe des erfindungsgemäßen Verfahrens ohne zusätzlichen Hardwareaufwand bestimmen, wenn ohnehin ein Radarsensor am Fahrzeug vorhanden ist.

Gegenstand der Erfindung ist außerdem ein Radarsensor, der zur Durchführung des erfindungsgemäßen Verfahrens ausgebildet ist.

Vorteilhafte Ausgestaltungen und Weiterbildungen der Erfindung sind in den Unteransprüchen angegeben.

Bei einem FMCW-Radar, bei dem die Frequenz des gesendeten Radarsignals abwechselnd mit steigenden und fallenden Frequenzrampen moduliert wird, kann als charakteristische Signatur die relative Lage der Frequenzmaxima im Spektrum des Bodenclutters für die steigende Rampe einerseits und die fallende Rampe andererseits ausgewertet werden.

In einer anderen Ausführungsform wird die charakteristische Signatur durch die Form des Frequenzspektrums des Bodenclutters insgesamt gebildet. Für einen gegebenen Betrag der Eigengeschwindigkeit, der mit Hilfe der Raddrehzahlsensoren gemessen wird, lässt sich das erwartete Spektrum des Bodenclutters einerseits für Vorwärtsfahrt und andererseits für Rückwärtsfahrt berechnen. Durch Vergleich mit dem tatsächlich vom Radarsensor aufgenommenen Spektrum kann dann zwischen Vorwärtsfahrt und Rückwärtsfahrt unterschieden werden.

Beschreibung von Ausführungsbeispielen

Im folgenden werden Ausführungsbeispiele der Erfindung anhand der Zeichnung näher erläutert.
Es zeigen:

Fig. 1    ein Blockdiagramm eines Radarsensors, der zur Durchführung des erfindungsgemäßen Verfahrens ausgebildet ist;

Fig. 2    ein Diagramm zur Illustration der geometrischen Verhältnisse beim Empfang von Bodenclutter;

Fig. 3    eine tabellarische Darstellung von Pfeildiagrammen zur Erläuterung einer Ausführungsform des erfindungsgemäßen Verfahrens

Fig. 4    ein Diagramm zur Illustration der bei dem Verfahren nach Fig. 3 verwendeten Signatur für unterschiedliche Eigengeschwindigkeiten des Fahrzeugs;

Fig. 5    ein Blockdiagramm eines Radarsensors gemäß einer anderen Ausführungsform der Erfindung; und

Fig. 6    ein Flussdiagramm eines Verfahrens zur fortlaufenden Feststellung der Fahrtrichtung.

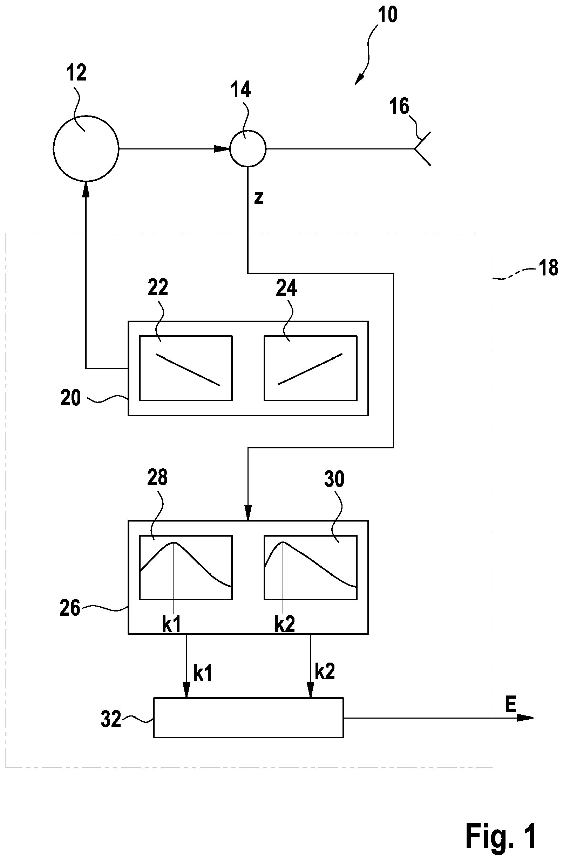

Fig. 1 zeigt als wesentliche Komponenten eines Radarsensors 10 für ein Kraftfahrzeug einen Oszillator 12, einen Mischer 14, eine Antenne 16 und ein Steuergerät 18. Der Radarsensor 10 ist als FMCW-Radar ausgebildet. Das Steuergerät 18 enthält ein Frequenzmodul 20, das den Oszillator 12 so ansteuert, dass die Frequenz des von dem Radarsensor 12 erzeugten Radarsignals abwechselnd mit einer fallenden Rampe 22 und einer steigenden Rampe 24 moduliert wird. Die Rampen 22 und 24 haben die gleiche Dauer T und dem Betrage nach den gleichen Frequenzhub |F|. Das vom Oszillator 12 erzeugte Radarsignal wird über den Mischer 14 an die Antenne 16 weitergeleitet und von der Antenne in die Umgebung emittiert. Das an Objekten in der Umgebung reflektierte Radarecho wird von der Antenne 16 empfangen und im Mischer 14 mit einem Teil des vom Oszillator 12 gelieferten Signals gemischt. Dadurch erhält man ein Zwischenfrequenzsignal z, dessen Frequenz einerseits von der Laufzeit der Radarwellen und damit vom Abstand der georteten Objekte und andererseits aufgrund des Doppler-Effektes von der Relativgeschwindigkeit der Objekte abhängig ist. Das Zwischenfrequenzsignal z wird in einem Verarbeitungsmodul 26 digitalisiert und durch schnelle Fourier-Transformation für jede der Rampen 22, 24 in ein entsprechendes Spektrum 28 bzw. 30 zerlegt.
Wenn sich stark reflektierende Objekte im Ortungsbereich des Radarsensors 10 befinden, so enthalten die Spektren 28, 30 für jedes dieser Objekte einen markanten Peak, dessen Frequenzlage durch den Abstand und die Relativgeschwindigkeit des betreffenden Objekts bestimmt ist. Anhand der Frequenzen der Peaks in den beiden Spektren 28 und 30, die zu demselben Objekt gehören, lassen sich dann der Abstand und die Relativgeschwindigkeit dieses Objekts bestimmen. Die entsprechenden Auswertungsprozeduren sind dem Fachmann bekannt und sollen hier nicht näher beschrieben werden.
Wenn sich keine markanten Objekte im Ortungsbereich befinden, wird die Form der Spektren 28 und 30 durch den sogenannten Bodenclutter bestimmt, d.h., durch Reflexionen an Bodenunebenheiten auf der Fahrbahnoberfläche. Das Verarbeitungsmodul 26 bestimmt die Frequenzlage k1 des Maximums des Bodenclutters im Spektrum 28 für die fallende Rampe 22 und die Frequenzlage k2 im Spektrum 30 des Bodenclutters für die steigende Rampe 24. Falls die Spektren neben dem Bodenclutter auch Objektpeaks enthalten, können diese zuvor mit bekannten Prozeduren ausgefiltert werden.
Wie im folgenden noch näher erläutert werden soll, bildet das Größenverhältnis der Frequenzlagen k1 und k2 eine charakteristische Signatur, die über die Bewegung der Antenne 16 relativ zur Fahrbahnoberfläche in Richtung der Hauptabstrahlrichtung der Antenne Auskunft gibt und somit, z.B. bei in Fahrtrichtung nach vorn gerichteter Antenne, eine Unterscheidung zwischen Vorwärtsfahrt und Rückwärtsfahrt ermöglicht. Das Steuergerät 18 weist ein Vergleichsmodul 32 auf, das die Frequenzlagen k1 und k2 miteinander vergleicht und anhand des Vergleichsergebnisses ein Entscheidungssignal E bildet, das entweder Vorwärtsfahrt oder Rückwärtsfahrt des Fahrzeugs anzeigt.

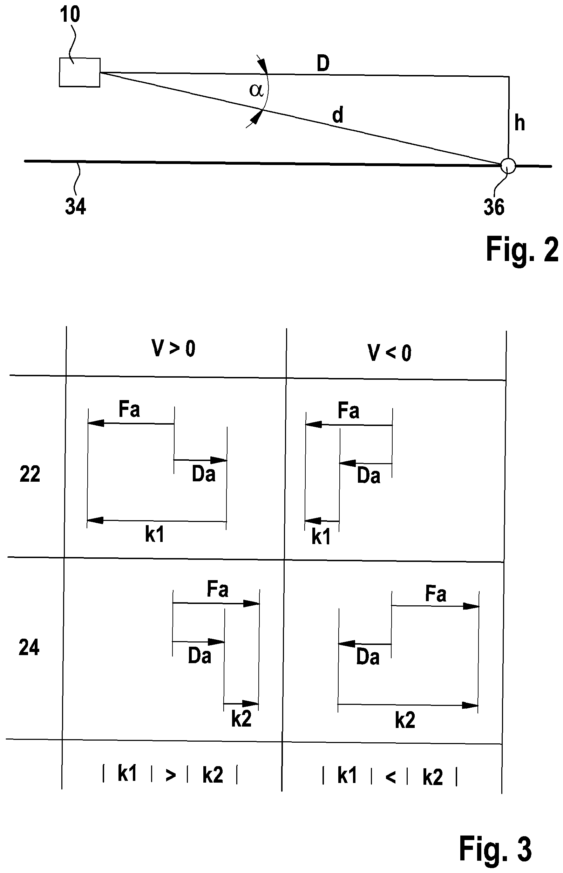

Fig. 2 zeigt den Radarsensor 10, der in einer bestimmten Einbauhöhe h oberhalb der Fahrbahnoberfläche 34 in das Fahrzeug eingebaut ist und Bodenclutter von einem bestimmten Punkt 36 auf der Fahrbahnoberfläche empfängt. Horizontal und in Fahrtrichtung des Fahrzeugs gemessen hat der Punkt 36 zum Radarsensor 10 den Abstand D. Der radiale, längs der Sichtlinie gemessene Abstand des Punktes 36 vom Radarsensor 10 ist mit d bezeichnet. Der Elevationswinkel des Punktes 36 vom Radarsensor 10 aus gesehen ist mit $\alpha$ bezeichnet. Es gilt folglich:

$$h = d * \sin \alpha.$$

Der Radarsensor 10 empfängt Bodenclutter nicht nur von dem einen Punkt 36, sondern von einer Vielzahl von Punkten, die in Fahrtrichtung auf der Fahrbahnoberfläche 34 verteilt sind. Für die hier anzustellenden Überlegungen kann jedoch vereinfachend der Bodenclutter als ein "normales" Objekt betrachtet werden, dessen Abstand und Relativgeschwindigkeit durch die Frequenzlage k des Maximums im Bodenclutter-Spektrum gegeben ist. Der Punkt 36 soll den Ort dieses fiktiven Objekts markieren. Wenn V die Eigengeschwindigkeit des Fahrzeugs ist, so gilt für die Relativgeschwindigkeit v des Punktes 36 relativ zum Radarsensor 10 (längs der Sichtlinie gemessen):

$$v = - V * \cos \alpha$$

Das Minuszeichen rührt daher, dass die Relativgeschwindigkeit bei zunehmendem Objektabstand positiv gezählt wird, während der Abstand d bei positiver Eigengeschwindigkeit V des Fahrzeugs abnimmt.
Für die Frequenzlage k des Maximums im Bodenclutter gilt bei einem FMCW-Radar wie für jedes Objekt die Formel:

$$k = (2/c)\,(d * F + v * f * T)$$

$$= (2/c) * F * h / \sin \alpha - (2/c) * f * T * V * \cos \alpha$$

$$= Fa - Da \tag{1}$$

Darin ist:

F        der Frequenzhub der Modulationsrampe

f        die Mittenfrequenz der betreffenden Modulationsrampe

T        die Dauer der Modulationsrampe

Fa      Frequenzhubanteil ($(2/c)*F*h / \sin \alpha$)

Da      Doppleranteil ($(2/c)*f*T*V* \cos \alpha$)

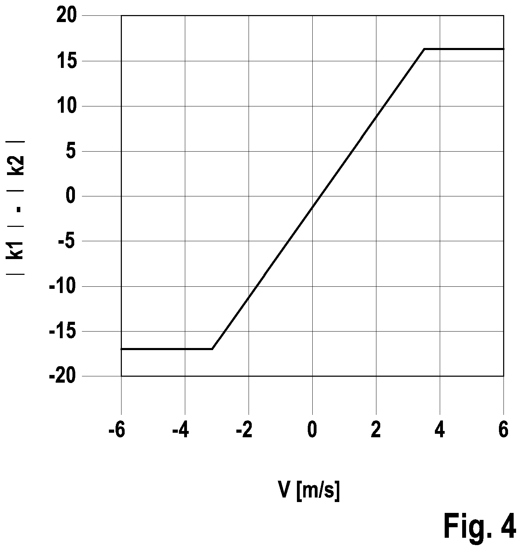

Die Frequenzlage k ist hier eine dimensionslose Größe, die das sogenannte Frequenzbin angibt, in dem das Maximum des Bodenclutter-Spektrums liegt. Wenn der Mischer 14 ein IQ-Mischer ist, der die komplexe Amplitude des Zwischenfrequenzsignals liefert, so kann zwischen positiven und negativen Frequenzen unterschieden werden, und das Spektrum hat demgemäß einen positiven und einen negativen Teil. Wenn jedoch der Mischer 14 nur ein reelles Zwischenfrequenzsignal liefert, so tritt im Spektrum als unabhängige Variable nur der Betrag |k| der Frequenzlage auf.
Mit Bezug auf Fig. 3 soll jetzt einerseits für positive Eigengeschwindigkeiten des Fahrzeugs (V > 0) und andererseits für negative Eigengeschwindigkeiten des Fahrzeugs (V < 0) untersucht werden, wie sich die Frequenzlage k1 für die fallende Modulationsrampe 22 und die Frequenzlage k2 für die steigende Modulationsrampe 24 aus dem Frequenzhub- und Doppleranteilen Fa und Da zusammensetzen.
Für die fallende Modulationsrampe 22 ist der Frequenzhubanteil Fa stets negativ (Pfeil nach links in Fig. 3), da der Frequenzhub F in Gleichung (1) negativ ist. Entsprechend ist für die steigende Modulationsrampe 24 der Frequenzhubanteil Fa stets positiv (Pfeil nach rechts). Bei positiver Eigengeschwindigkeit des Fahrzeugs (V > 0) ist der Doppleranteil Da stets positiv, bei negativer Eigengeschwindigkeit (V < 0) ist der Doppleranteil negativ. Bei Vorwärtsfahrt ist daher auf der fallenden Modulationsrampe 22 der Betrag von k1 gleich der Summe der Beträge von Fa und Da, auf der steigenden Modulationsrampe 24 hingegen gleich der Differenz dieser Beträge, und es gilt deshalb |k1| > |k2|. Bei Rückwärtsfahrt (V < 0) ist es hingegen umgekehrt, und des gilt |k1| < |k2|. So kann das Vergleichsmodul 32 einfach durch Vergleich der Beträge von k1 und k2 zwischen Vorwärtsfahrt und Rückwärtsfahrt unterscheiden.
Naturgemäß ist die Unterscheidung schwieriger, wenn die Eigengeschwindigkeit V des Fahrzeugs dem Betrage nach sehr klein ist. In der Praxis wird jedoch schon bei kleinen Fahrzeuggeschwindigkeiten in der Größenordnung von etwa 1 m/s eine hinreichend sichere Unterscheidung möglich. Als Beispiel illustriert Fig. 4 die Abhängigkeit der Betragsdifferenz |k1|-|k2| von der Eigengeschwindigkeit V für eine typische Beispielkonfiguration, für welche die folgenden Parameter gelten:

|F|=600 MHz

T=5 ms

f=76,5 GHz

h=0,35 m

$\alpha$=10° (Maximum des Bodenclutters, abhängig vom vertikalen Antennendiagramm)

Da für das Entscheidungssignal E nur die Absolutbeträge der Frequenzlagen k1 und k2 benötigt werden, ist das Verfahren auch mit Radarsensoren ausführbar, die keinen IQ-Mischer aufweisen.

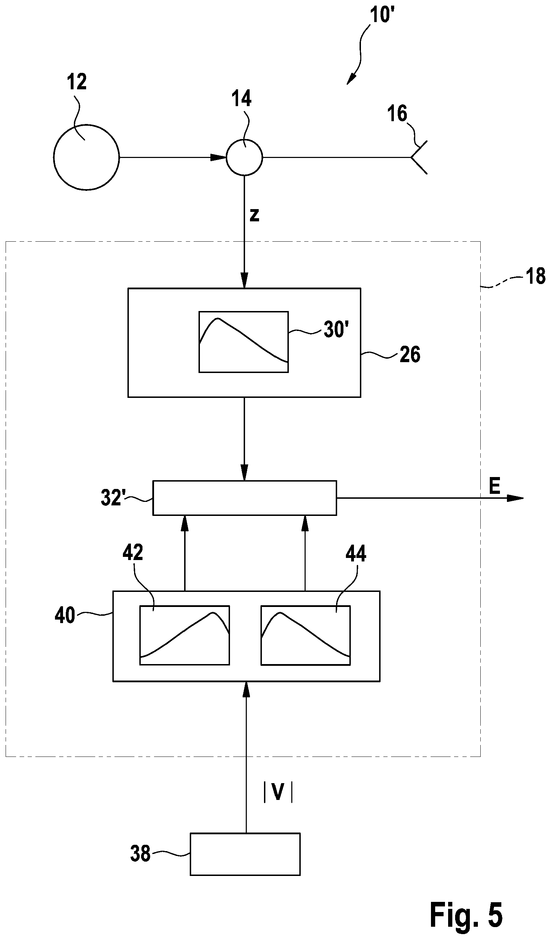

Ein alternatives Ausführungsbeispiel eines erfindungsgemäßen Radarsensors 10' ist in Fig. 5 dargestellt. Das Steuergerät 18 dieses Radarsensors erhält von einem kostengünstigen Raddrehzahlsensor 38 ein Signal das (ggf. bis auf eine Proportionalitätskonstante) den Betrag |V| der Eigengeschwindigkeit V des Fahrzeugs angibt. Ein Berechnungsmodul 40 berechnet anhand dieses Signals zwei zu erwartende Bodenclutter-Spektren 42, 44, nämlich eines für die Annahme einer positiven Eigengeschwindigkeit (V > 0) und eines für die Annahme einer negativen Eigengeschwindigkeit (V < 0). Die Berechnung dieser Spektren basiert auf Gleichung (1) und berücksichtigt zusätzlich die durch das Antennendiagramm und die Abstandsdämpfung bedingte Intensitätsverteilung des Bodenclutters über den in Frage kommenden Bereich der Elevationswinkel $\alpha$. Für eine (nach Betrag und Richtung) als fest angenommene Eigengeschwindigkeit V kann Gleichung (1) als Funktion betrachtet werden, die k in Abhängigkeit vom Winkel $\alpha$ angibt. Man kann deshalb das gesuchte Spektrum z.B. dadurch berechnen, dass man anhand des Antennendiagramms und der Abstandsdämpfung für jeden Elevationswinkel $\alpha$ die Intensität des empfangenen Radarsignals berechnet und dann anhand der Gleichung (1) die zugehörige Frequenzlage im Spektrum aufsucht und die Intensität dort einträgt. Zur Verminderung des Rechenaufwands können Spektren für verschiedene angenommene Eigengeschwindigkeiten vorab berechnet und in Tabellenform oder in geeignet parametrisierter Form in einem Speicher des Steuergerätes 18 hinterlegt werden.

In dem in Fig. 5 gezeigten Beispiel werden nur die Spektren für eine Modulationsrampe berechnet.

Ein Vergleichsmodul 32' ist in diesem Fall so ausgebildet, dass es die berechneten Spektren 42 und 44 nacheinander mit dem im Verarbeitungsmodul 26 aufgenommenen Spektrum 30' vergleicht, dass den tatsächlich vom Radarsensor empfangenen Bodenclutter repräsentiert. Für den Vergleich kann irgendein geeignetes Abstandsmaß für Funktionen benutzt werden, beispielsweise das Integral über das Quadrat der Differenz der zu vergleichenden Funktionen. Bei diesem Vergleich wird dasjenige der beiden Spektren 42, 44, das der tatsächlichen Fahrtrichtung des Fahrzeugs entspricht, am besten mit dem gemessenen Spektrum 30' übereinstimmen. Das wird in der Regel auch dann gelten, wenn in das gemessene Spektrum zusätzlich Objektpeaks aufweist. Je nach geforderter Genauigkeit kann deshalb u. U. ein Ausfiltern der Objektpeaks aus dem Bodenclutter-Spektrum unterbleiben.

Mit dem Vergleichsmodul 32' ist auch eine Qualitätsprüfung in dem Sinne möglich, dass das Entscheidungssignal E nur dann als gültig angesehen wird, wenn der Abstand zwischen einem der beiden Spektren 42, 44 und dem gemessenen Spektrum 22' unterhalb eines vorgegebenen Schwellenwertes liegt. Wenn der Abstand für keines der Spektren 42, 44 unter dem Schwellenwert liegt, kann ein Fehlersignal ausgegeben werden.

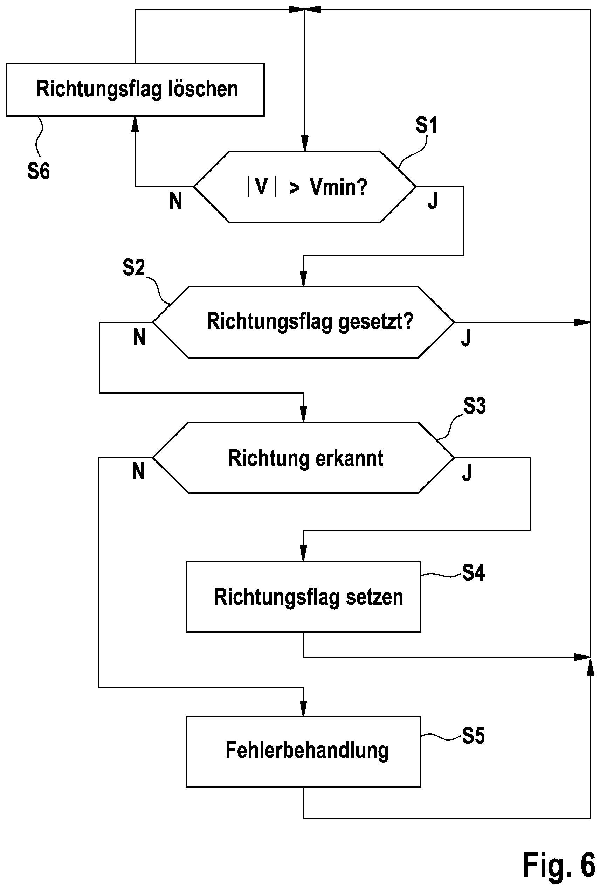

Wenn sich die Fahrtrichtung des Fahrzeugs ändert, also bei einem Wechsel von Vorwärtsfahrt auf Rückwärtsfahrt oder umgekehrt, muss das vom Raddrehzahlsensor 38 gelieferte Signal |V| zu irgendeinem Zeitpunkt praktisch den Wert null annehmen. Solange |V| oberhalb eines bestimmten Schwellenwertes bleibt, kann deshalb für die Unterscheidung zwischen Vorwärtsfahrt und Rückwärtsfahrt das vorher erzeugte Entscheidungssignal E benutzt werden, ohne dass eine Neuberechnung erforderlich ist. Ein möglicher Ablauf ist in Fig. 6 in einem Flussdiagramm dargestellt.

In Schritt S1 wird geprüft, ob der Betrag |V| der Eigengeschwindigkeit größer als der vorgegebene Schwellenwert Vmin ist. Wenn das der Fall ist (J), wird in Schritt S2 geprüft, ob ein Richtungsflag gesetzt ist. Wenn das der Fall ist (J), erfolgt ein Rücksprung zu Schritt S1 und es beginnt ein neuer Programmzyklus. Wenn kein Richtungsflag gesetzt ist (N), wird mit Hilfe des Entscheidungsmoduls 32' ein neues Entscheidungssignal E generiert. In Schritt S3 wird zunächst geprüft, ob eine hinreichende Übereinstimmung zwischen einem der Spektren 42, 44 und dem gemessenen Spektrum 22' erreicht werden konnte. Wenn das der Fall ist (J), wird in Schritt S4 das Richtungsflag anhand des Entscheidungssignals E entweder auf Vorwärtsfahrt oder auf Rückwärtsfahrt gesetzt, und anschließend erfolgt ein Rücksprung zu Schritt S1. Wenn in Schritt S3 die Fahrtrichtung nicht zuverlässig erkannt werden konnte (N), so wird in Schritt S5 eine Fehlerbehandlung durchgeführt. Diese Fehlerbehandlung kann beispielsweise darin bestehen, dass die kumulierte Häufigkeit von fehlgeschlagenen Richtungserkennungen aktualisiert wird, und wenn die Häufigkeit von Fehlern einen bestimmten Schwellenwert überschreitet, ein Fehlersignal ausgegeben wird. Nach der Fehlerbehandlung erfolgt wieder ein Rücksprung zu Schritt S1.

Wenn in Schritt S1 festgestellt wird, dass der Betrag der Eigengeschwindigkeit unter den Minimalwert Vmin abgenommen hat (M), so wird in Schritt S6 das Richtungsflag gelöscht, und es erfolgt ein Rücksprung zu Schritt S1. Ein neues Richtungsflag wird erst dann gesetzt, wenn der Betrag der Eigengeschwindigkeit wieder über Vmin zugenommen hat.

**Patentansprüche**

1. Verfahren zur Unterscheidung zwischen Vorwärtsfahrt und Rückwärtsfahrt bei einem Fahrzeug, das einen FMCW-Radarsensor (10; 10') aufweist, der dazu ausgebildet ist, Abstände und Relativgeschwindigkeiten von Objekten im Verkehrsumfeld des Fahrzeugs zu messen, **dadurch gekennzeichnet, dass** die Unterscheidung zwischen Vorwärtsfahrt und Rückwärtsfahrt anhand einer charakteristischen Signatur eines von dem Radarsensor (10; 10') empfangenen Signals vorgenommen wird und dabei eine charakteristische Signatur eines Bodenclutter-Signals ausgewertet wird indem das Verfahren die folgenden Schritten aufweist:

   - Empfangen eines Signals (|V|) eines Drehzahlsensors (38) und Berechnen des Betrages der Eigengeschwindigkeit (V) des Fahrzeugs aus diesem Signal,
   - Berechnen eines erwarteten Bodenclutter-Spektrums (42) anhand des Betrages der Eigengeschwindigkeit (V) unter Annahme von Vorwärtsfahrt,
   - Berechnen eines erwarten Bodenclutter-Spektrums (44) anhand des Betrages der Eigengeschwindigkeit (V) unter Annahme von Rückwärtsfahrt,
   - Vergleich der beiden erwarteten Spektren (42, 44) mit dem tatsächlich vom Radarsensor (10') gemessenen Bodenclutter-Spektrum (30').

2. Verfahren nach Anspruch 1, bei dem als charakteristische Signatur die Frequenzlage (k1, k2) des Maximums im Spektrum (28, 30) des Bodencutters für mindestens eine fallende Modulationsrampe (22) und mindestens eine steigende Modulationsrampe (44) aufgesucht wird und die Frequenzlagen (k1, k2) für diese beiden Modulationsrampen miteinander verglichen werden.

3. Radarsensor für Kraftfahrzeuge, **gekennzeichnet durch** ein Steuergerät (18), das zur Ausführung des Verfahrens nach Anspruch 1 oder Anspruch 2 ausgebildet ist.

**Claims**

1. Method for distinguishing between forwards motion and backwards motion in a vehicle having an FMCW radar sensor (10; 10') which is designed to measure distances and relative speeds of objects in the traffic environment of the vehicle, **characterized in that** forwards motion and backwards motion are distinguished on the basis of a characteristic signature of a signal received by the radar sensor (10; 10') and in the process a characteristic signature of a ground clutter signal is evaluated by virtue of the method having the following steps of:

   - receiving a signal (|V|) from a speed sensor (38) and calculating the magnitude of the vehicle's own speed (V) from this signal,
   - calculating an expected ground clutter spectrum (42) on the basis of the magnitude of the vehicle's own speed (V), assuming forwards motion,
   - calculating an expected ground clutter spectrum (44) on the basis of the magnitude of the vehicle's own speed (V), assuming backwards motion,
   - comparing the two expected spectra (42, 44) with the ground clutter spectrum (30') actually measured by the radar sensor (10').

2. Method according to Claim 1, in which the frequency position (k1, k2) of the maximum in the spectrum (28, 30) of the ground clutter is searched for for at least one falling modulation ramp (22) and at least one rising modulation ramp (44) as the characteristic signature, and the frequency positions (k1, k2) for these two modulation ramps are compared with one another.

3. Radar sensor for motor vehicles, **characterized by** a control device (18) which is designed to carry out the method according to Claim 1 or Claim 2.

**Revendications**

**1.** Procédé de différenciation entre la marche avant et la marche arrière sur un véhicule, lequel possède un capteur radar FMCW (10 ; 10') qui est configuré pour mesurer des distances et des vitesses relatives d'objets dans l'environnement du trafic du véhicule, **caractérisé en ce que** la différenciation entre la marche avant et la marche arrière est effectuée au moyen d'une signature caractéristique d'un signal reçu par le capteur radar (10 ; 10') et une signature caractéristique d'un signal de fouillis d'échos de sol est ici interprétée **en ce que** le procédé comprend les étapes suivantes :

- réception d'un signal (|V|) d'un capteur de vitesse de rotation (38) et calcul de la valeur de la vitesse propre (V) du véhicule à partir de ce signal,
- calcul d'un spectre de fouillis d'échos de sol (42) attendu au moyen de la valeur de la vitesse propre (V) en supposant une marche avant,
- calcul d'un spectre de fouillis d'échos de sol (44) attendu au moyen de la valeur de la vitesse propre (V) en supposant une marche arrière,
- comparaison des deux spectres (42, 44) attendus avec le spectre de fouillis d'échos de sol (30') réellement mesuré par le capteur radar (10').

**2.** Procédé selon la revendication 1, selon lequel la position en fréquence (k1, k2) du maximum dans le spectre (28, 30) du fouillis d'échos de sol est recherchée en tant que signature caractéristique pour au moins une rampe de modulation descendante (22) et au moins une rampe de modulation montante (44), et les positions de fréquence (k1, k2) pour ces deux rampes de modulation sont comparées l'une à l'autre.

**3.** Capteur radar pour véhicules automobiles, **caractérisé par** un contrôleur (18) qui est configuré pour mettre en oeuvre le procédé selon la revendication 1 ou la revendication 2.

**Fig. 1**

**Fig. 2**

**Fig. 3**

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008008385 A1
- DE 4042494 C2
- EP 0936562 B1
- US 4635059 A1